# EUROPÄISCHE PATENTSCHRIFT

(11) **EP 2 862 772 B1**
(45) Veröffentlichungstag und Bekanntmachung des Hinweises auf die Patenterteilung: **28.11.2018**
(21) Anmeldenummer: 14002821.8
(22) Anmeldetag: 13.08.2014
(51) Int. Cl.: B60W 40/12, B60W 10/18, B60W 40/13

(54) **Verfahren zur Überprüfung eines Beladungszustandes eines Aufliegers oder Anhängers eines Nutzfahrzeuges**
Method for checking the loading state of a semitrailer or trailer of a commercial vehicle
Procédé de vérification d'un état de chargement d'une semi-remorque ou d'une remorque d'un véhicule utilitaire

(30) Priorität: 18.10.2013 DE 102013017407
(43) Veröffentlichungstag der Anmeldung: 22.04.2015
(73) Patentinhaber: MAN Truck & Bus AG, 80995 München (DE)
(72) Erfinder: Staufer, Werner, 85051 Ingolstadt (DE); Gerusel, Karsten, 80689 München (DE)
(74) Vertreter: Liebl, Thomas

(56) Entgegenhaltungen:
- WO-A1-2004/074804
- DE-A1-102008 042 433
- DE-A1-102010 026 411
- US-A1- 2013 132 025

## Beschreibung

Die Erfindung betrifft ein Verfahren zur Überprüfung eines Beladungszustandes eines Aufliegers oder Anhängers eines Nutzfahrzeuges, insbesondere eines mehrachsigen Aufliegers oder Anhängers eines Nutzfahrzeuges, nach dem Oberbegriff des Anspruchs 1. Ferner betrifft die Erfindung eine Vorrichtung zur Durchführung eines derartigen Verfahrens sowie ein Nutzfahrzeug mit einer Vorrichtung zur Durchführung eines derartigen Verfahrens.

Je nach Einsatzzweck können Nutzfahrzeuge alternativ als Solofahrzeug oder in Fahrzeugkombination betrieben werden. Unter Fahrzeugkombinationen werden dabei Kombinationen von Zugfahrzeugen bzw. Zugmaschinen mit Anhängern oder Aufliegern verstanden, wobei als Anhänger zum Beispiel Gelenkdeichselanhänger oder Zentralachsanhänger allgemein bekannt sind. Auflieger werden hauptsächlich in Form von Sattelkraftfahrzeugen betrieben. Derartige Anhänger bzw. Auflieger werden regelmäßig mit zu transportierenden Waren oder Gütern beladen, wobei die richtige Beladung eine Grundvoraussetzung für einen sicheren Fahrbetrieb ist. Insbesondere ist die Beladung der Auflieger bzw. Anhänger so vorzunehmen, dass sich eine für den Fahrbetrieb optimale Schwerpunktlage ergibt, da bei großen Abweichungen des Schwerpunkts von einer Soll-Schwerpunktlage im beladenen Zustand die Gefahr besteht, dass das Fahrzeug zum Wanken bzw. Nicken neigt, was die Fahrsicherheit beeinträchtigen kann.

Um die tatsächliche Schwerpunktlage eines Fahrzeugs zu bestimmen, ist es aus der DE 10 2004 060 809 A1 bekannt, die Einfederwege an den gefederten Achsen des Fahrzeugs zu messen, wobei aus den gemessenen Einfederwegen und deren zeitlicher Änderung sowie mindestens einer die Querdynamik des Fahrzeugs beschreibenden Querdynamikgröße ein Istwert für die Schwerpunkthöhe des Fahrzeugs bestimmt wird. Als Querdynamikgröße wird ein Lenkwinkel, eine Querbeschleunigung, eine Fahrzeuggeschwindigkeit, eine Gierrate, eine Einlenkgeschwindigkeit, eine Raddrehzahl oder eine Fahrzeuggrundstabilisierung verwendet.

Die DE 10 2008 042 433 A1 betrifft ein Verfahren zum Ermitteln des Schwerpunkts eines Kraftfahrzeugs, bei dem zunächst für wenigstens ein Rad des Kraftfahrzeugs zwei unterschiedliche Antriebskraftwerte, zugehörige Längsbeschleunigungswerte und zugehörige Radschlupfwerte ermittelt werden. Aus diesen Werten werden dann wenigstens zwei Schwerpunkt-Koordinaten ermittelt. Die Antriebskraftwerte können dabei beispielsweise durch ein Antriebsmoment und durch ein Bremsmoment gebildet sein.

Weiter ist aus der DE 10 2010 026 411 A1 ein Verfahren zur Durchführung einer Bremsprüfung an Anhänger- und/oder Aufliegerfahrzeugen bekannt, bei dem ein am Zugfahrzeug neu angekoppelter Auflieger oder Anhänger erfasst wird, und sodann eine On-Bord-Bremsenprüfung für die Auflieger- oder Anhängerbremsanlage initialisiert wird. Ein definierter Bremsvorgang wird im Nachgang zu dieser Initialisierung nach einer definierten Fahrstrecke mittels der Auflieger- oder Anhängerbremsanlage eingeleitet. Anschließend wird ein Bremswirkung-Istwert erfasst und ermittelt, der mit einem vorhandenen Bremswirkung-Sollwert verglichen wird, wobei unter Berücksichtigung dieses Auswerteergebnisses ein Informationssignal ausgegeben wird.

Es ist Aufgabe der vorliegenden Erfindung, ein Verfahren und eine Vorrichtung zur Überprüfung eines Beladungszustandes eines Aufliegers oder Anhängers eines Nutzfahrzeuges, insbesondere eines mehrachsigen Aufliegers oder Anhängers eines Nutzfahrzeuges, zur Verfügung zu stellen, mittels dem der Beladungszustand auf einfache und funktionssichere Weise ermittelt werden kann.

Diese Aufgabe wird gelöst mit den Merkmalen der unabhängigen Patentansprüche. Vorteilhafte Ausgestaltungen sind Gegenstand der Unteransprüche.

Gemäß Anspruch 1 ist ein Verfahren zur Überprüfung eines Beladungszustandes eines Aufliegers oder Anhängers eines Nutzfahrzeuges, insbesondere eines mehrachsigen Aufliegers oder Anhängers eines Nutzfahrzeuges, vorgesehen, das folgende Verfahrensschritte aufweist:
a) Erfassen, ob am Zugfahrzeug ein Auflieger oder Anhänger angekoppelt ist,
b) Initialisieren einer Beladungsprüfung (vorzugsweise inklusive Selbsttest bzw. Plausibilitätscheck im Sinne der DE 10 2010 026 411 A1) für den Fall, dass ein angekoppelter Auflieger oder Anhänger erfasst wird,
c) Einleiten wenigstens eines definierten Bremsvorgangs mittels der Anhänger- oder Aufliegerbremsanlage nach einer definierten Fahrstrecke für, in Fahrzeugquerrichtung gesehen, das wenigstens eine linke oder rechte Rad oder für wenigstens einen Teil der linken und rechten Räder des Aufliegers oder Anhängers, wobei für jedes bei einem Bremsvorgang gebremste linke und rechte Rad jeweils ein Bremswirkung-Istwert ermittelt wird, der mit einem vorhandenen Bremswirkung-Sollwert verglichen wird, wobei auf der Basis dieses Vergleichs, insbesondere auf der Basis einer eventuellen Abweichung, der erfassten Bremswirkung-Istwerte von den diesen jeweils zugeordneten Bremswirkung-Sollwerten die Schwerpunktlage in Fahrzeuglängsrichtung und in Fahrzeugquerrichtung bestimmt wird,
d) Erfassen der während des Durchfahrens der definierten Fahrstrecke auf wenigstens eine Achse des Zugfahrzeugs und/oder auf wenigstens eine Achse des Aufliegers oder Anhängers wirkenden Ist-Achslast, insbesondere einer durch den Bremsvorgang hervorgerufenen Ist-Achslast, auf deren Basis die fahrbedingte dynamische Achslastverlagerung ermittelt wird, die ein Maß für die Schwerpunkthöhe und damit die Schwerpunktlage in Fahrzeughochachsenrichtung darstellt,
e) Ermitteln einer aktuellen Schwerpunktlage für den Auflieger oder Anhänger unter Berücksichtigung des Auswerteergebnisses gemäß Schritt c) und d),
f) Optionales Ausgeben eines Informationssignals.

Anders als beim vorstehend beschriebenen Stand der Technik gemäß der DE 10 2004 060 809 A1 wird bzw. werden somit bei der erfindungsgemäßen Lösung zur Bestimmung der Schwerpunktlage nicht der Einfederweg bzw. die Radlasten herangezogen, sondern erfolgt die Ermittlung der Schwerpunktlage in Fahrzeuglängsrichtung und in Fahrzeugquerrichtung allein auf der Basis der tatsächlichen Bremswirkung einzelner abgebremster Räder. Dieser erfindungsgemäßen Lösung liegt somit die Erkenntnis zugrunde, dass ein stark belastetes Rad später blockiert als ein geringer belastetes Rad, was zum Beispiel aus Schlupf- und/oder Raddrehzahlwerten abgeleitet werden kann und auch nachfolgend noch näher erläutert wird. Dadurch kann zum Beispiel ausgehend von einer definierten, vorbekannten Soll-Belastung des Rades und einer dieser zugeordneten Soll-Blockierung (Bremswirkung-Sollwert) einfach auf die jeweilige Radbelastung geschlossen werden, da eine zeitlich spätere bzw. frühere Radblockierung (Bremswirkung-Istwert) beim Bremsvorgang dann eine solche Abweichung vom Sollzustand darstellt, die einen schnellen und einfachen Rückschluss auf die tatsächliche Radbelastung und damit auf die Schwerpunktlage in Fahrzeugquerrrichtung und in Fahrzeuglängsrichtung erlaubt.

Der erfindungsgemäßen Schwerpunktermittlung erfolgt somit im Wesentlichen Maße auf der Basis der Blockier-Neigung der Räder, was insbesondere dann von Vorteil ist, wenn das Fahrzeug ohnehin bereits über eine Einrichtung zur On-Bord-Bremsenprüfung für die Auflieger- oder Anhängerbremsanlage verfügt, wie dies bei der DE 10 2010 026 411 A1 der Fall ist, deren gesamter Offenbarungsgehalt ausdrücklich auch zum Gegenstand der vorliegenden Anmeldungsunterlagen gemacht wird.

Mit der erfindungsgemäßen Verfahrensführung kann somit auf einfache und funktionssichere Weise lediglich durch einfaches An- bzw. Abbremsen definierter rechter und linker Räder des Aufliegers oder Anhängers auf eine Schwerpunktlage des Aufliegers bzw. Anhängers und damit auf eine ordnungsgemäße Beladung desselben geschlossen werden.

Für jedes Fahrzeug bzw. für jeden Anhänger oder Aufleger sind neben dem Schwerpunkt im unbeladenen Zustand auch die sogenannten statischen Achslasten vorbekannt. Letztere verändern sich beim Beschleunigen oder Verzögern des Fahrzeugs, weswegen man hier dann von den sogenannten dynamischen Achslasten spricht. Im Rahmen der vorliegenden Erfindung wird somit die zum Beispiel beim definierten Bremsvorgang erfolgende dynamische Achslastverlagerung dazu ausgenutzt die Höhenlage des Schwerpunktes in Fahrzeughochachsenrichtung zu bestimmen. Bei einem hohen Schwerpunkt ist nämlich das Moment um die Querachse bzw. y-Achse des Fahrzeugs beim Bremsen höher als bei einem demgegenüber niedrigeren Schwerpunkt. Diese Neigung zum Bremsnicken wird somit bei der vorliegenden Erfindungsidee dazu ausgenutzt, die Höhe des Schwerpunktes in Fahrzeughochachsenrichtung bzw. in z-Richtung zu bestimmen.

Die Schwerpunktbestimmung in Fahrzeuglängs- und Fahrzeugquerrichtung bzw. in x- und y-Richtung könnte zum Beispiel gemeinsam in einem einzigen Messvorgang mit nahezu konstanter Geschwindigkeit ermittelt werden, während die Bestimmung des Schwerpunktes in Hochachsenrichtung bzw. z-Richtung in einer separaten Messung mit dynamischer Geschwindigkeit erfolgen könnte.

Dabei werden bevorzugt die ohnehin am Fahrzeug vorhandenen elektronisch geregelten Brems- und Fahrerassistenzsysteme in einer vorteilhaften Doppelfunktion dazu verwendet, um die für die Beladungsprüfung erforderlichen Parameter zur Verfügung zu stellen. Diese Beladungsprüfung kann somit auch auf bauteiltechnisch wenig aufwändige Weise durchgeführt werden.

Bei einer definierten Abweichung der Ist-Schwerpunktlage von einer Soll-Schwerpunktlage kann dann beispielsweise ein Warnsignal als Informationssignal ausgegeben werden. Unter einem Informationssignal wird dabei jede Art von Signal verstanden, das eine Information für eine Auswerteeinrichtung und/oder ein Steuergerät und/oder ein Bediener, sei es zur Weiterverarbeitung und/oder zur Anzeige bestimmt, verstanden. Zum Beispiel kann gemäß einer besonders bevorzugten Ausgestaltung in Verbindung mit aus einem Navigationsgerät abgerufener Topographie- bzw. Streckendaten eine Maximalgeschwindigkeit für ein Befahren einer auf der Fahrstrecke liegenden Wegstrecke, wie beispielsweise einer Kurve, als Informations- bzw. Warnsignal ausgegeben werden. Mittels eines derartigen Warnsignals wird der Fahrzeugführer dazu angehalten, zum Beispiel die Fahrzeuggeschwindigkeit an die tatsächlichen Gegebenheiten anzupassen. Alternativ oder zusätzlich können auch weitere Zwangsmaßnahmen vorgesehen sein, die den Bediener dazu anhalten, die Beladung zu überprüfen bzw. zu optimieren. So kann zum Beispiel alternativ oder zusätzlich vorgesehen sein, dass ein Zugfahrzeugbetrieb gesperrt und/oder die Antriebsleistung des Zugfahrzeugs nur in einem definierten Maße zur Verfügung steht, wenn die Ist-Schwerpunktlage in einem definierten Maße von einer Soll-Schwerpunktlage abweicht.

Die Räder der linken und rechten Seite des Aufliegers oder Anhängers werden bevorzugt gleichzeitig abgebremst, um für die jeweiligen Räder oder Rädergruppen die entsprechend zugeordneten Bremswirkung-Istwerte zu ermitteln. Grundsätzlich besteht jedoch auch die Möglichkeit, die Räder zeitversetzt sowie einzeln oder gruppenweise abzubremsen. Insbesondere zur Reduzierung des Reifen- bzw. Bremsenverschleißes könnte in äquivalenter Weise alternativ (ggf. auch zusätzlich, zum Beispiel als Redundanz) das ABS-Signal ausgewertet werden, um die Blockierneigung des jeweiligen Rades festzustellen.

Wie bereits zuvor dargestellt, ist gemäß einer besonders bevorzugten Ausgestaltung vorgesehen, dass zur Erfassung der Bremswirkung eines definierten Bremsvorgangs Daten und/oder Parameter wenigstens eines im Fahrzeug installierten elektronisch geregelten Brems- und/oder Fahrwerksystems erfasst und aus diesem ein Bremswirkung-Istwert ermittelt wird. Derartige elektronisch geregelte und ohne in dem Fahrzeug vorhandene Brems- und Fahrwerksysteme können zum Beispiel ein Anti-Blockiersystem (ABS) und/oder eine Anti-Schlupfregelung (ASR) und/oder eine elektronische Bremsen-Steuerung (EBS) und/oder ein Elektronisches-Stabilitäts-Programm (ESP) und/oder eine FahrdynamikRegelung (FDR) und/oder eine Automatische-Lastabhängige-Bremse (ABL) sein. Diese gegebenenfalls ohnehin am Fahrzeug vorhandenen elektronisch geregelten Brems- und Fahrerassistenzsysteme können somit in baulich wenig aufwändiger Weise vorteilhaft gleichzeitig in einer Doppelfunktion dazu dienen, die für die Beladungsprüfung des Aufliegers oder Anhängers benötigten Daten zur Verfügung zu stellen. Gemäß einer besonders bevorzugten Ausgestaltung kann hierzu vorgesehen sein, dass an jedem abgebremsten Rad mittels wenigstens eines Schlupf- und/oder Drehzahlsensors ein Schlupf- und/oder eine Raddrehzahl während des definierten Bremsvorgangs erfasst wird, wobei der so ermittelte Wert selbst den Bremswirkung-Istwert darstellt oder alternativ der so ermittelte Wert dazu dient, in Verbindung mit einem an die jeweils abgebremste Radbremse angelegten definierten Bremsdruck, den Bremswirkung-Istwert zu bestimmen, der mit einem entsprechenden, den Bremswirkung-Sollwert darstellenden Vergleichswert verglichen wird. Im letztgenannten Beispielfall kann zum Beispiel der Bremswirkung-Istwert in Form eines kombinierten Bremsdruck-Schlupf- bzw. Drehzahlverhältnisses angegeben sein. Weiter könnte zum Beispiel alternativ oder zusätzlich auch das Verhältnis Bremsdruck zu Drehzahlgradienten, das heißt zum Beispiel eingesteuerter Druck im Verhältnis zur erreichten Raddrehzahl-Reduzierung, für die Radbremsen errechnet werden, um noch ein weiteres, nicht abschließendes Beispiel zu nennen.

Gemäß einer weiteren besonders bevorzugten Verfahrensführung ist vorgesehen, dass der definierte Bremsvorgang dadurch eingeleitet wird, dass an die jeweils abzubremsenden Radbremsen für eine definierte Zeitdauer ein definierter Bremsdruck angelegt wird, wobei die Druckvorgabe bevorzugt so gewählt ist, dass, für einen sanften Bremsvorgang, ein zeitlich gestreckter, stetiger Bremsdruckaufbau bis zu einem definierten Bremsdruckmaximum erfolgt, welches Bremsdruckmaximum kleiner oder gleich dem maximalen Bremsdruck für die jeweilige Radbremse ist, oder dass, für ein schlagartiges Abbremsen, ein plötzlicher peakartiger Bremsdruck vorgegeben wird, der kleiner oder gleich einem maximalen Bremsdruck für die jeweilige Radbremse ist. Die jeweilige Art des Bremsvorgangs kann dabei je nach Anhängertyp bzw. Aufliegertyp individuell ausgewählt und vorgegeben werden.

Grundsätzlich ist es vorteilhaft, wenn beim definierten Bremsvorgang nur die Aufhänger- oder Aufliegerbremsanlage, nicht jedoch die Bremsanlage eines den Anhänger oder Auflieger ziehenden Zugfahrzeuges betätigt wird, weil damit ein unverfälschtes Ergebnis im Hinblick auf die Bremswirkung der Anhänger- oder Aufliegerbremsanlage erzielt wird. Damit lässt sich die Schwerpunktlage für sowohl Anhänger oder Auflieger in Fahrzeugquerrichtung gesehen sehr gut und mit hinreichender Genauigkeit ermitteln. Ebenfalls ist dies, bezüglich der Schwerpunktlage in Fahrzeuglängsrichtung gesehen, bei einem mehrachsigen Anhänger mit voneinander beabstandeter Vorder- und Hinterachse unproblematisch. Lediglich bei der ausschließlichen Verwendung der Aufliegerbremsanlage mittels eines Aufliegers, bei dem die wenigstens eine Achse in Fahrzeuglängsrichtung gesehen relativ weit hinten angeordnet ist, können sich hier dann gegebenenfalls gewisse Unschärfen bei der Ermittlung der Schwerpunktlage in Fahrzeuglängsrichtung ergeben. Um dies zu vermeiden, ist gemäß einer besonders bevorzugten Ausgestaltung vorgesehen, dass bei einem Abbremsen eines derartigen Aufliegers mittels der Aufliegerbremsanlage zudem ein Signal eines am Zugfahrzeug, insbesondere an der Hinterachse des Zugfahrzeugs, angeordneten ALB-Sensors einer automatischen lastabhängigen Bremse (ALB) in die Ermittlung der Schwerpunktlage in Fahrzeuglängsrichtung gesehen mit einbezogen wird. Damit kann dann auf einfache und funktionssichere Weise auch die Schwerpunktlage des Aufliegers in Fahrzeuglängsrichtung gesehen mit der erforderlichen hinreichenden Genauigkeit ermittelt werden.

Für eine einfache Schwerpunktermittlung ist es von Vorteil, dass nach der Initialisierung der Beladuhgsprüfung das Zugfahrzeug auf einer definierten, vorzugsweise ebenen, Fahrstrecke beschleunigt wird und aus dem gemessenen Anfahrmoment im beladenen Zustand sowie dem hinterlegten oder errechneten Anfahrmoment ohne Beladung, das Beladungsgewicht des Anhängers oder Aufliegers ermittelt wird, so dass die Ist-Schwerpunktlage in Abhängigkeit von dem so ermittelten Beladungsgewicht ermittelt wird. Dies hat nochmals den wesentlichen Vorteil, dass auch das Beladungsgewicht in vorteilhafter Weise selbst bei der Schwerpunktbestimmung mit eingeht, weil das Beladungsgewicht einen deutlichen Einfluss auf die Fahrstabilität des Fahrzeugs hat.

Die Erfassung eines am Zugfahrzeug angekoppelten Aufliegers oder Anhängers erfolgt bevorzugt über wenigstens eine an der Schnittstelle zwischen dem Zugfahrzeug einerseits und dem Anhänger oder Auflieger andererseits ohnehin vorhandene Schnittstellentechnik, die zum Beispiel eine elektrische Schnittstelle und/oder eine Druckluftschnittstelle sein kann. In diesem Zusammenhang kann beispielsweise vorgesehen sein, dass einem Beladungs-Steuergerät bzw. -Steuermodul, nach ordnungsgemäßer Ankopplung eines Aufliegers oder Anhängers wenigstens ein Signal und/oder Parameter und/oder Datensatz übermittelt wird, aus dem mittelbar oder unmittelbar definierte Informationen über die Bremsanlage des Aufliegers oder Anhängers sowie gegebenenfalls weitere Informationen über den Typ und den Aufbau des Aufliegers oder Anhängers ableitbar sind, insbesondere eine Schwerpunktlage des unbeladenen oder optimal beladenen Aufliegers oder Anhängers abgeleitet werden können. Anhand der so ermittelten Daten kann dann das im Beladungs-Steuergerät bzw. - Steuermodul hinterlegte Prüfmuster aufgerufen bzw. aktiviert werden.

Die Initialisierung der Beladungsprüfung kann dabei zum Beispiel selbsttätig, zum Beispiel bei jeder erfassten Neuankopplung, oder selbsttätig in Abhängigkeit vom erfassten Auflieger bzw. Anhängertyp erfolgen oder aber auch vom Bediener individuell vorgegeben werden, zum Beispiel per Knopf- oder Tastendruck und/oder per Sprachsteuerung.

Gemäß einer weiteren bevorzugten erfindungsgemäßen Ausgestaltung kann vorgesehen sein, dass der Beladungszustand, vorzugsweise das Beladungsgewicht (zum Beispiel das Gesamtgewicht), des Aufliegers oder Anhängers mittels einer Kontrolleinrichtung überwacht wird, insbesondere fortlaufend überwacht wird. Die Initialisierung der Beladungsprüfung kann somit nach Erfassen und/oder Erkennen einer Neuankopplung eines Aufliegers bzw. Anhängers durchgeführt werden und/oder nach Erfassen und/oder Erkennen einer Beladungsänderung eines bereits früher erfassten bzw. erkannten Aufliegers oder Anhängers erneut durchgeführt werden.

Gemäß einer weiteren besonders bevorzugten Ausgestaltung ist vorgesehen, dass der wenigstens eine definierte Bremsvorgang spätestens nach einer Fahrstrecke von 50m und/oder in der Ebene eingeleitet wird. Dadurch ist sichergestellt, dass die Beladungsprüfung lediglich bei niedrigen Beschleunigungen und Geschwindigkeiten durchgeführt wird und damit in einem Betriebsbereich des Fahrzeugs, in dem eine evtl. festgestellte nicht ordnungsgemäße Beladung weniger bedeutsam ist.

Die sich mit der Vorrichtung und dem Nutzfahrzeug ergebenden Vorteile wurden bereits zuvor in Verbindung mit der Verfahrensführung ausführlich gewürdigt. Insofern wird auf die zuvor gemachten Ausführungen verwiesen.

Die Erfindung wird nachfolgend beispielhaft anhand einer Zeichnung näher erläutert.

Es zeigen:
- Fig. 1: schematisch und beispielhaft ein Ablaufdiagramm für eine erfindungsgemäße Überprüfung eines Beladungszustandes eines Aufliegers oder Anhängers eines Nutzfahrzeuges, und
- Fig. 2: schematisch einen Sattelzug mit Zugfahrzeug und Sattelauflieger.

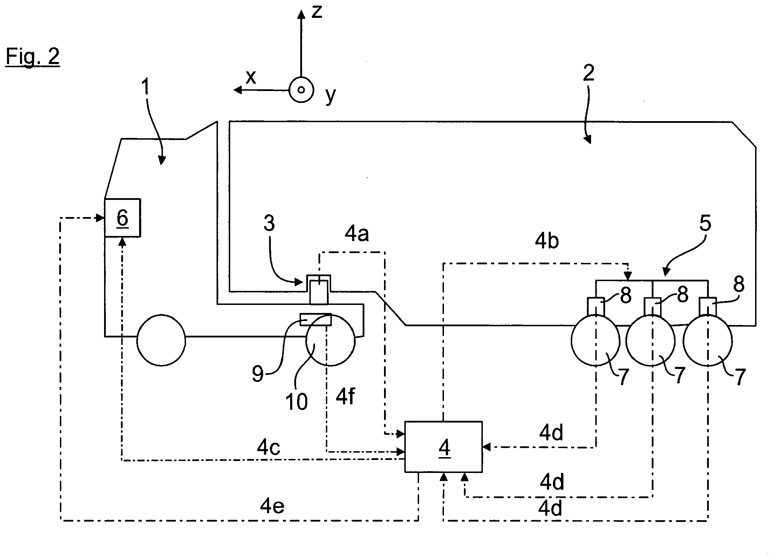

In der Fig. 2 ist schematisch ein Sattelzug mit einer Zugmaschine 1 und einem Sattelauflieger bzw. Auflieger 2 dargestellt, wobei der Auflieger hier beispielhaft dreiachsig ausgebildet ist. Der Auflieger 2 ist über eine Sattelkupplung 3 an die Zugmaschine 1 angekoppelt, wobei die Sattelkupplung 3 eine Schnittstelle ausbildet, über die der Auflieger 2 mit elektrischer Energie und/oder Druckluft versorgt wird, was hier jedoch nicht im Detail dargestellt ist.

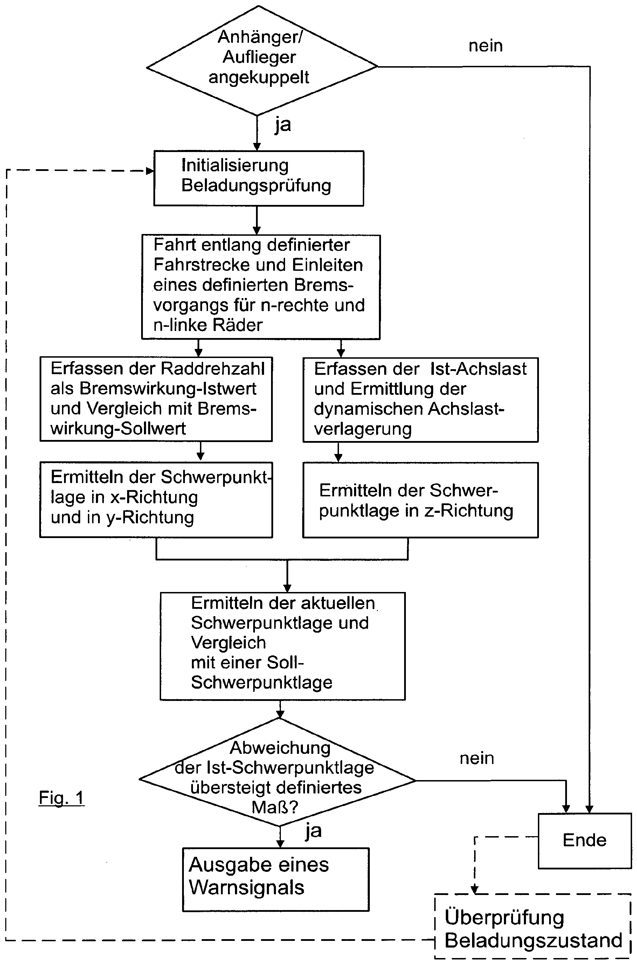

Durch die so ausgebildete Sattelkupplung 3 kann dann bei einem an die Zugmaschine 1 angekoppelten Auflieger 2 ein Informationssignal abgegriffen oder abgeleitet werden (Signalleitung 4a) und einem Beladungsprüf-Steuergerät 4 zugeführt werden, das das Informationssignal auswertet und zum einen erkennt (Fig. 1), dass ein Auflieger an die Zugmaschine 1 angekuppelt ist. Zudem kann aus diesem Informationssignal vom Beladungsprüf-Steuergerät 4 abgeleitet werden, um welchen Aufliegertyp und um welche Auflieger-Bremsanlage 5, die hier lediglich äußerst schematisch und prinzipiell dargestellt ist, es sich handelt.

An dieser Stelle sei erwähnt, dass das Beladungsprüf-Steuergerät 4 hier nur aus Übersichtlichkeitsgründen außerhalb des Zugfahrzeugs 1 dargestellt ist, dieses aber selbstverständlich Bestandteil einer On-Bord-Unit sein kann oder ein separates Funktionsmodul ausbildet, das von der Fahrerkabine aus einsehbar und/oder bedienbar ist.

Wie dies weiter aus der Fig. 1 entnommen werden kann, wird für den Fall, dass vom Beladungsprüf-Steuergerät 4 erkannt worden ist, dass ein Auflieger 2 ordnungsgemäß angekuppelt worden ist, eine Beladungsprüfung initialisiert und zum Beispiel dem Fahrer im Display 6 angezeigt (Signalleitung 4c).

Wird nun bei initialisierter Beladungsprüfung das Fahrzeug vom Fahrer auf einer bevorzugt ebenen, geraden Strecke angefahren, führt das Beladungsprüf-Steuergerät 4 einen definierten Bremsvorgang durch, der für den erfassten Aufliegertyp im Beladungsprüf-Steuergerät 4 hinterlegt ist. Hierbei wird dann über die strichpunktiert dargestellte Signalleitung 4b der Bremsanlage 5 ein Bremssignal zugeführt, gemäß dem zum Beispiel sämtliche drei linken und rechten Räder 7 der drei Achsen des Aufliegers 2 nach einer vorgegebenen Wegstrecke zum Beispiel mit einem maximalen Bremsdruck beaufschlagt werden, was bei ordnungsgemäßer Beladung des Aufliegers 2 zu einer im Wesentlichen gleichzeitigen Blockade der sechs Räder 7 führen würde. Alternativ dazu kann aber auch lediglich ein, bezogen auf den maximalen Bremsdruck reduzierter Teil-Bremsdruck an die Auflieger-Bremsanlage 5 angelegt werden.

Über die zum Beispiel Bestandteil eines ABS/EBS-Systems bildenden radseits vorhandenen Schlupf- und/oder Drehzahlsensoren 8 können dann von den einzelnen abgebremsten Rädern Schlupf- und/oder Drehzahlsignale 4d an das Beladungsprüf-Steuergerät 4 übermittelt werden, welche Drehzahlsignale 4d dann im Beladungsprüf-Steuergerät 4 verarbeitet und/oder mit dort für den ausgewählten Bremsvorgang hinterlegten Sollwerten, zum Beispiel Schlupf- und/oder Raddrehzahl-Sollwerten, verglichen werden. Auf der Basis der so ermittelten Abweichung der erfassten Bremswirkung-Istwerte von den diesen jeweils zugeordneten Bremswirkung-Sollwerten kann dann die Schwerpunktlage in Fahrzeuglängsrichtung und in Fahrzeugquerrichtung bestimmt werden, da ein stark belastetes Rad später blockiert, ein leicht belastetes Rad dagegen früher als ein "ordnungsgemäß" bzw. in gewünschter Weise belastetes Rad. Durch den Vergleich der rechtzeitigen und der linksseitigen Bremswirkung-Istwerte der Räder mit den zugeordneten Bremswirkung-Sollwerten lässt sich die Schwerpunktlage in Fahrzeugquerrichtung y sehr gut bestimmen.

Wie aus der Fig. 2 sehr gut ersichtlich ist, sind die Räder 7 hier am Auflieger 2 jedoch mehr in einem in Fahrzeuglängsrichtung gesehen hinteren Aufliegerbereich angeordnet, so dass sich hier die Schwerpunktlage in Fahrzeuglängsrichtung nur mit einer gewissen Unschärfe bestimmen lässt. Aus diesem Grund ist zum Beispiel an der Hinterachse 10 der Zugmaschine ein ALB-Sensor 9 einer automatischen lastabhängigen Bremse (ALB) angeordnet, dessen Signalwert (Signalleitung 4f) dem Beladungsprüf-Steuergerät 4 zugeleitet wird. Unter Einbeziehung dieses Signalwerts kann dann auch über die gesamte Aufliegerlänge und damit in Fahrzeuglängsrichtung gesehen eine hinreichend genaue Aussage darüber getroffen werden, wo der Schwerpunkt in Fahrzeuglängsrichtung x gesehen liegt.

Zur Ermittlung der Schwerpunktlage in Hochachsenrichtung bzw. in z-Richtung wird dagegen die während des Durchfahrens der definierten Fahrstrecke auf zum Beispiel die Achsen des Aufliegers 2 wirkende Ist-Achslast, die durch den zum Beispiel Bremsvorgang hervorgerufen ist, erfasst und auf deren Basis die fahrbetriebbedingte dynamische Achslastverlagerung ermittelt, die ein Maß für die Schwerpunkthöhe darstellt. Denn bei einem hohen Schwerpunkt ist, wie bereits zuvor ausgeführt, das Moment um die Querachse bzw. y-Achse des Fahrzeugs beim Bremsen höher als bei einem demgegenüber niedrigeren Schwerpunkt. Diese unterschiedliche Neigung zum Bremsnicken wird somit bei der vorliegenden Erfindungsidee dazu ausgenutzt, die Höhe des Schwerpunktes in Fahrzeughochachsenrichtung bzw. in z-Richtung zu bestimmen.

Nachdem dann die Schwerpunktlage in x-, y- und z-Richtung ermittelt worden ist, erhält man die aktuelle bzw. Ist-Schwerpunktlage, die dann mit einer Soll-Schwerpunktlage, die im Beladungsprüf-Steuergerät 4 abgelegt ist, verglichen werden kann. Für den Fall, dass die Abweichung der Ist-Schwerpunktlage von der Soll-Schwerpunktlage ein definiert vorgegebenes Maß überschreitet, kann dann zum Beispiel ein Warnsignal an den Fahrzeugführer ausgegeben werden. Für den Fall, dass die Abweichung der Ist-Schwerpunktlage von der Soll-Schwerpunktlage kein definiert vorgegebenes Maß überschreitet, wird dann eine ordnungsgemäß erfolgte Beladung festgestellt und kann die Beladungsprüfung dann beendet werden.

Optional und in der Fig. 1 strichliert dargestellt, kann der Beladungszustand, zum Beispiel das Gesamtgewicht des Aufliegers oder Anhängers mittels einer Kontrolleinrichtung fortlaufend überwacht werden und dementsprechend die Beladungsprüfung nach Erfassen und/oder Erkennen einer Neuankopplung eines Aufliegers bzw. Anhängers und/oder nach Erfassen und/oder Erkennen einer Beladungsänderung des bereits früher erfassten bzw. erkannten Aufliegers oder Anhängers erneut durchgeführt werden.

### Bezugszeichenliste

1 Zugmaschine
2 Auflieger
3 Sattelkupplung
4 Steuergerät
4a bis 4f Signalleitungen
5 Bremsanlage
6 Display
7 Räder
8 Drehzahlsensoren
9 ALB-Sensor
10 Hinterachse

## Patentansprüche

1. Verfahren zur Überprüfung eines Beladungszustandes eines Aufliegers oder Anhängers eines Nutzfahrzeuges, insbesondere eines mehrachsigen Aufliegers oder Anhängers eines Nutzfahrzeugs, **gekennzeichnet durch** folgende Verfahrensschritte:
a) Erfassen, ob am Zugfahrzeug (1) ein Auflieger (2) oder Anhänger angekoppelt ist,
b) Initialisieren einer Beladungsprüfung für den Fall, dass ein angekoppelter Auflieger (2) oder Anhänger erfasst wird,
c) Einleiten wenigstens eines definierten Bremsvorgangs mittels der Anhänger- oder Aufliegerbremsanlage (5) nach einer definierten Fahrstrecke für, in Fahrzeugquerrichtung gesehen, das wenigstens eine linke oder rechte Rad (7) oder für wenigstens einen Teil der linken und rechten Räder (7) des Aufliegers (2) oder Anhängers, wobei für jedes bei einem Bremsvorgang gebremste linke und rechte Rad (7) jeweils ein Bremswirkung-Istwert ermittelt wird, der mit einem vorhandenen Bremswirkung-Sollwert verglichen wird, wobei auf der Basis dieses Vergleichs, insbesondere auf der Basis einer eventuellen Abweichung, der erfassten Bremswirkung-Istwerte von den diesen jeweils zugeordneten Bremswirkung-Sollwerten die Schwerpunktlage in Fahrzeuglängsrichtung und in Fahrzeugquerrichtung bestimmt wird,
d) Erfassen der während des Durchfahrens der definierten Fahrstrecke auf wenigstens eine Achse des Zugfahrzeugs (1) und/oder auf wenigstens eine Achse des Aufliegers (2) oder Anhängers wirkenden Ist-Achslast, insbesondere der **durch** den Bremsvorgang und/oder der **durch** ein Bremsnicken hervorgerufenen Ist-Achslast, auf deren Basis die fahrbedingte dynamische Achslastverlagerung ermittelt wird, die ein Maß für die Schwerpunkthöhe darstellt,
e) Ermitteln einer aktuellen Schwerpunktlage für den Auflieger (2) oder Anhänger unter Berücksichtigung des Auswerteergebnisses gemäß Schritt c) und Schritt d),
f) Optionales Ausgeben eines Informationssignals.

2. Verfahren nach Anspruch 1, **dadurch gekennzeichnet, dass** bei einer definierten Abweichung der Ist-Schwerpunktlage von einer Soll-Schwerpunktlage ein Warnsignal ausgegeben wird, insbesondere in Verbindung mit aus einem Navigationsgerät abgerufener Streckendaten eine Maximalgeschwindigkeit für ein Befahren einer auf der Fahrstrecke liegenden Wegstrecke, insbesondere Kurve, als Warnsignal ausgegeben wird, und/oder ein Zugfahrzeugbetrieb gesperrt und/oder die Antriebsleistung des Zugfahrzeugs (1) nur in einem definierten Maße zur Verfügung steht.

3. Verfahren nach Anspruch 1 oder 2, **dadurch gekennzeichnet, dass** die Räder (7) der linken und rechten Seite des Aufliegers (2) oder Anhängers gleichzeitig oder zeitversetzt sowie einzeln oder gruppenweise abgebremst werden, um für die jeweiligen Räder (7) oder Rädergruppen entsprechend zugeordnete Bremswirkung-Istwerte zu ermitteln.

4. Verfahren nach einem der vorhergehenden Ansprüche, **dadurch gekennzeichnet, dass** zur Erfassung und Ermittlung der Bremswirkung eines definierten Bremsvorgangs Daten und/oder Parameter wenigstens eines im Fahrzeug installierten elektronisch geregelten Brems- und/oder Fahrwerkssystems, insbesondere eines ABS (Anti-Blockier-Systems) und/oder einer ASR (Anti-Schlupf-Regelung) und/oder einer EBS (Elektronische-Bremsen-Steuerung) und/oder eines ESP (Elektronisches-Stabilitäts-Programms) und/oder einer FDR (Fahrdynamikregelung), erfasst und aus diesem ein Bremswirkung-Istwert ermittelt wird.

5. Verfahren nach Anspruch 4, **dadurch gekennzeichnet, dass** an jedem abgebremsten Rad (7) mittels wenigstens eines Schlupf- und/oder Drehzahlsensors (8) ein Schlupf und/oder eine Raddrehzahl während des definierten Bremsvorgangs erfasst wird, wobei der so ermittelte Wert selbst den Bremswirkung-Istwert darstellt oder wobei der so ermittelte Wert dazu dient, in Verbindung mit einem an die jeweils abgebremste Radbremse angelegten definierten Bremsdruck, den Bremswirkung-Istwert, insbesondere in Form eines Bremsdruck/Schlupf- und/oder Drehzahlverhältnisses, zu bestimmen, der mit einem entsprechenden, den Bremswirkung-Sollwert darstellenden Vergleichswert verglichen wird.

6. Verfahren nach einem der vorhergehenden Ansprüche, **dadurch gekennzeichnet, dass** der definierte Bremsvorgang dadurch eingeleitet wird, dass an die jeweils abzubremsenden Radbremsen für eine definierte Zeitdauer ein definierter Bremsdruck angelegt wird, wobei die Druckvorgabe bevorzugt so gewählt ist, dass, für einen sanften Bremsvorgang, ein zeitlich gestreckter, stetiger Bremsdruckaufbau bis zu einem definierten Bremsdruckmaximum erfolgt, welches Bremsdruckmaximum kleiner oder gleich dem maximalen Bremsdruck für die jeweilige Radbremse ist, oder dass, für ein schlagartiges Abbremsen, ein plötzlicher, peakartiger Bremsdruck vorgegeben wird, der kleiner oder gleich einem maximalen Bremsdruck für die jeweilige Radbremse ist.

7. Verfahren nach einem der vorhergehenden Ansprüche, **dadurch gekennzeichnet, dass** beim definierten Bremsvorgang nur die Aufhänger- oder Aufliegerbremsanlage (5), nicht jedoch die Bremsanlage eines den Anhänger oder Auflieger (2) ziehenden Zugfahrzeuges (1) bestätigt wird.

8. Verfahren nach Anspruch 7, **dadurch gekennzeichnet, dass** bei einem Abbremsen eines Aufliegers (2) mittels der Aufliegerbremsanlage (5) zudem ein Signal eines am Zugfahrzeug, insbesondere an der Hinterachse des Zugfahrzeugs, angeordneten ALB-Sensors (9) einer automatischen lastabhängigen Bremse (ALB) in die Ermittlung der Schwerpunktlage in Fahrzeuglängsrichtung gesehen mit einbezogen wird.

9. Verfahren nach einem der vorhergehenden Ansprüche, **dadurch gekennzeichnet, dass** nach der Initialisierung der On-Board-Beladungsprüfung das Zugfahrzeug (1) auf einer definierten, vorzugsweise ebenen, Fahrstrecke beschleunigt wird und aus dem gemessenen Anfahrmoment im beladenen Zustand sowie dem hinterlegten oder errechneten Anfahrmoment ohne Beladung, das Beladungsgewicht des Anhängers oder Aufliegers ermittelt wird, und
dass die Ist-Schwerpunktlage in Abhängigkeit von dem so ermittelten Beladungsgewicht ermittelt wird.

10. Verfahren nach einem der vorhergehenden Ansprüche, **dadurch gekennzeichnet, dass** die Erfassung eines am Zugfahrzeug (1) angekoppelten Aufliegers (2) oder Anhängers über wenigstens eine an der Schnittstelle zwischen dem Zugfahrzeug (1) einerseits und dem Anhänger oder Auflieger (2) andererseits ohnehin vorhandene Schnittstellentechnik, vorzugsweise eine elektrische Schnittstelle und/oder eine Druckluft-Schnittstelle, dergestalt erfolgt,
dass einem Beladungs-Steuergerät (4) oder -Steuermodul, nach ordnungsgemäßer Ankopplung eines Aufliegers (2) oder Anhängers wenigstens ein Signal und/oder Parameter und/oder Datensatz übermittelt wird, aus dem mittelbar oder unmittelbar definierte Informationen über die Bremsanlage (5) des Aufliegers (2) oder Anhängers sowie gegebenenfalls weitere Informationen über den Typ und den Aufbau des Aufliegers (2) oder Anhängers ableitbar sind, insbesondere eine Schwerpunktlage des unbeladenen oder optimal beladenen Aufliegers (2) oder Anhängers ableitbar sind,
dass anhand der so ermittelten Daten ein im Beladungs-Steuergerät (4) oder - Steuermodul hinterlegtes Prüfmuster aufgerufen und/oder aktiviert wird.

11. Verfahren nach einem der vorhergehenden Ansprüche, **dadurch gekennzeichnet, dass** die Initialisierung der Beladungsprüfung selbsttätig bei jeder erfassten Neuankopplung oder selbsttätig in Abhängigkeit vom erfassten Auflieger- oder Anhängertyp erfolgt oder vom Bediener individuell vorgebbar ist, insbesondere per Knopf- oder Tastendruck und/oder per Sprachsteuerung.

12. Verfahren nach einem der vorhergehenden Ansprüche, **dadurch gekennzeichnet, dass** der Beladungszustand, vorzugsweise das Beladungsgewicht, des Aufliegers (2) oder Anhängers mittels einer Kontrolleinrichtung überwacht wird, insbesondere fortlaufend überwacht wird, und dass die Initialisierung der Beladungsprüfung nach Erfassen und/oder Erkennen einer Neuankopplung eines Aufliegers (2) oder Anhängers und/oder nach Erfassen und/oder Erkennen einer Beladungsänderung eines bereits früher erfassten und/oder erkannten Aufliegers (2) oder Anhängers durchgeführt wird.

13. Verfahren nach einem der vorhergehenden Ansprüche, **dadurch gekennzeichnet, dass** der wenigstens eine definierte Bremsvorgang spätestens nach einer Fahrtstrecke von 50m und/oder in der Ebene eingeleitet wird.

14. Vorrichtung besonders geeignet zur Durchführung eines Verfahrens nach einem der vorhergehenden Verfahrensansprüche.

15. Nutzfahrzeug mit einer Vorrichtung nach Anspruch 14 zur Durchführung eines Verfahrens nach einem der Ansprüche 1 bis 13.

## Claims

1. Method for checking a loading status of a semitrailer or trailer of a utility vehicle, in particular of a multi-axle semitrailer or trailer of a utility vehicle, **characterized by** the following method steps:
a) sensing whether a semitrailer (2) or trailer is coupled to the tractor vehicle (1),
b) initializing checking of the loading in the event of a coupled semitrailer (2) or trailer being sensed,
c) initiating at least one defined braking process by means of the trailer or semitrailer brake system (5) after a defined route for, when viewed in the transverse direction of the vehicle, the at least one left-hand or right-hand wheel (7) or for at least some of the left-hand and right-hand wheels (7) of the semitrailer (2) or trailer, wherein for each left-hand and right-hand wheel (7) which is braked during a braking process in each case a braking effect actual value is determined which is compared with an existing braking effect setpoint value, wherein on the basis of this comparison, in particular on the basis of a possible deviation, of the sensed braking effect actual values from the braking effect setpoint values which are respectively assigned to the latter the centre of gravity is determined in the longitudinal direction of the vehicle and in the transverse direction of the vehicle,
d) sensing the actual axle load acting on at least one axle of the tractor vehicle (1) and/or on at least one axle of the semitrailer (2) or trailer while the defined route is being travelled through, in particular the actual axle load which is caused by the braking process and/or by braking pitching and on the basis of which the dynamic axle load shift, which is brought about by travel and constitutes a measure of the height of the centre of gravity, is determined,
e) determining a current centre of gravity for the semitrailer (2) or trailer taking into account the evaluation result according to step c) and step d), and
f) optional outputting of an information signal.

2. Method according to Claim 1, **characterized in that** when there is a defined deviation of the actual centre of gravity from a setpoint centre of gravity a warning signal is output, in particular in conjunction with route data which are retrieved from a navigation device, a maximum speed for travel along a section of route, in particular a bend, located on the route, is output as a warning signal, and/or a tractor vehicle mode is blocked and/or the driving power of the tractor vehicle (1) is available only to a defined degree.

3. Method according to Claim 1 or 2, **characterized in that** the wheels (7) of the left-hand and right-hand sides of the semitrailer (2) or trailer are braked simultaneously or with offset timing and individually or in groups, in order to determine correspondingly assigned braking effect actual values for the respective wheels (7) or groups of wheels.

4. Method according to one of the preceding claims, **characterized in that**, in order to sense and determine the braking effect of a defined braking process, data and/or parameters of at least one electronically controlled brake and/or chassis system installed in the vehicle, in particular of an ABS (anti-lock brake system) and/or a TCS (traction control system) and/or an EBC (electronic brake control system) and/or an ESP (electronic stability program) and/or a VDCS (vehicle dynamics control system) are acquired, and a braking effect actual value is determined therefrom.

5. Method according to Claim 4, **characterized in that** a slip and/or a wheel rotational speed are/is acquired during the defined braking process at each braked wheel (7) by means of at least one slip and/or rotational speed sensor (8), wherein the value which is determined in this way itself represents the braking effect actual value, or wherein the value which is determined in this way, in conjunction with a defined brake pressure which is applied to the respectively braked wheel brake, serves to determine the braking effect actual value, in particular in the form of a brake pressure/slip ratio and/or rotational speed ratio, which is compared with a corresponding comparison value which represents the braking effect setpoint value.

6. Method according to one of the preceding claims, **characterized in that** the defined braking process is initiated by virtue of the fact that a defined brake pressure is applied for a defined time period to the wheel brakes which are to be respectively braked, wherein the brake pre-specification is preferably selected such that for a gentle braking process a continuous build up of brake pressure which is extended chronologically takes place up to a defined brake pressure maximum, which brake pressure maximum is less than or equal to the maximum brake pressure for the respective wheel brake, or that for sudden braking a sudden, peak-like brake pressure is predefined which is less than or equal to a maximum brake pressure for the respective wheel brake.

7. Method according to one of the preceding claims, **characterized in that** during the defined braking process only the trailer brake system or semitrailer brake system (5) but not the brake system of a tractor vehicle (1) towing the trailer or semitrailer (2) is confirmed.

8. Method according to Claim 7, **characterized in that** during braking of a semitrailer (2) by means of the semitrailer brake system (5) a signal of an ALB sensor (9), arranged on the tractor vehicle, in particular on the rear axle of the tractor vehicle, of an automatic load-dependent brake (ALB) is also included in the determination of the centre of gravity when viewed in the longitudinal direction of the vehicle.

9. Method according to one of the preceding claims, **characterized in that** after the initialization of the on-board checking of the loading the tractor vehicle (1) is accelerated on a defined, preferably level, route, and the laden weight of the trailer or semitrailer is determined from the measured driving torque in the laden state and the stored or calculated driving torque without a load, and
**in that** the actual centre of gravity is determined as a function of the laden weight which is determined in this way.

10. Method according to one of the preceding claims, **characterized in that** the sensing of a semitrailer (2) or trailer which is coupled to the tractor vehicle (1) is carried out by means of at least one technical interface unit, preferably an electrical interface and/or a compressed air interface which is present in any case at the interface between the tractor vehicle (1), on the one hand, and the trailer or semitrailer (2), on the other, in such a way
that at least one signal and/or parameter and/or data set is transferred to a load control unit (4) or load control module after satisfactory coupling of a semitrailer (2) or trailer, from which signal and/or parameter and/or data set indirectly or directly defined information about the brake system (5) of the semitrailer (2) or trailer as well as, if appropriate, further information about the type and design of the semitrailer (2) or trailer can be derived, in particular a centre of gravity of the unladen or optimally laden semitrailer (2) or trailer can be derived,
**in that** on the basis of the data determined in this way a test pattern which is stored in the load control unit (4) or load control module is retrieved and/or activated.

11. Method according to one of the preceding claims, **characterized in that** the initialization of the checking of the loading is carried out automatically whenever a new coupling is sensed or automatically as a function of the sensed type of semitrailer or trailer, or can be predefined individually by the operator, in particular by pressing a button or key and/or by voice-activated control.

12. Method according to one of the preceding claims, **characterized in that** the loading status, preferably the laden weight, of the semitrailer (2) or trailer is monitored by means of a control device, in particular is monitored continuously, and **in that** the initialization of the checking of the loading is carried out after sensing and/or detection of a new coupling of a semitrailer (2) or trailer and/or after sensing and/or detection of a change in the loading of a semitrailer (2) or trailer which has already been sensed and/or detected earlier.

13. Method according to one of the preceding claims, **characterized in that** the at least one defined braking process is initiated at the latest after a route of 50 m and/or on the flat.

14. Device, particularly suitable for carrying out a method according to one of the preceding method claims.

15. Utility vehicle having a device according to Claim 14 for carrying out a method according to one of Claims 1 to 13.

## Revendications

1. Procédé de contrôle d'un état de chargement d'un semi-remorque ou d'une remorque d'un véhicule utilitaire, notamment d'un semi-remorque ou d'une remorque à plusieurs essieux d'un véhicule utilitaire, **caractérisé par** les étapes de procédé suivantes :
a) détection permettant d'établir si un semi-remorque (2) ou une remorque est accouplé au véhicule utilitaire (1),
b) initialisation d'un contrôle de chargement pour le cas où un semi-remorque (2) ou une remorque accouplé(e) est détecté(e),
c) initiation d'au moins une opération de freinage définie au moyen du système de freinage de semi-remorque ou de remorque (5) après un trajet défini pour, en observant dans le sens transversal du véhicule, l'au moins une roue (7) gauche ou droite ou pour au moins une partie des roues (7) gauches et droites du semi-remorque (2) ou de la remorque, une valeur réelle d'effet de freinage étant respectivement déterminée pour chaque roue (7) gauche et droite freinée lors d'une opération de freinage, laquelle est comparée à une valeur de consigne d'effet de freinage présente, la position du centre de gravité dans le sens longitudinal du véhicule et dans le sens transversal du véhicule étant déterminée sur la base de cette comparaison, notamment sur la base d'un éventuel écart entre les valeurs réelles d'effet de freinage acquises et les valeurs de consigne d'effet de freinage qui leurs sont respectivement associées,
d) détection de la charge d'essieu réelle agissant sur au moins un essieu du véhicule tracteur (1) et/ou sur au moins un essieu du semi-remorque (2) ou de la remorque pendant le parcours du trajet défini, notamment de la charge d'essieu réelle provoquée par l'opération de freinage et/ou par une plongée au freinage, sur la base de laquelle est déterminé le transfert de charge d'essieu dynamique lié au déplacement, lequel représente une mesure pour la hauteur du centre de gravité,
e) détermination d'une position actuelle du centre de gravité pour le semi-remorque (2) ou la remorque en tenant compte du résultat de l'interprétation selon l'étape c) et l'étape d),
f) délivrance optionnelle d'un signal d'information.

2. Procédé selon la revendication 1, **caractérisé en ce qu'**en présence d'un écart défini entre la position réelle du centre de gravité et une position de consigne du centre de gravité, un signal d'alerte est émis, notamment une vitesse maximale, en relation avec des données de trajet interrogées à partir d'un appareil de navigation, pour un passage sur une distance se trouvant sur le trajet, notamment un virage, est émise sous la forme d'un signal d'alerte et/ou un fonctionnement du véhicule tracteur est bloqué et/ou la puissance motrice du véhicule tracteur (1) n'est disponible que dans une mesure définie.

3. Procédé selon la revendication 1 ou 2, **caractérisé en ce que** les roues (7) du côté gauche et droit du semi-remorque (2) ou de la remorque sont freinées simultanément ou avec un décalage dans le temps ainsi qu'individuellement ou en groupe afin de déterminer les valeurs réelles d'effet de freinage associées correspondantes pour les roues (7) ou les groupes de roues respectifs.

4. Procédé selon l'une des revendications précédentes, **caractérisé en ce que** pour l'acquisition et la détermination de l'effet de freinage d'une opération de freinage définie, des données et/ou des paramètres d'au moins un système de freinage et/ou de châssis à régulation électronique installé dans le véhicule, notamment d'un ABS (système de freinage antiblocage) et/ou d'un ASR (système d'antipatinage) et/ou d'un EBS (commande électronique de freinage) et/ou d'un ESP (électrostabilisateur programmé) et/ou d'une FRD (régulation de la dynamique de conduite) sont acquises et la valeur réelle de l'effet de freinage est déterminée à partir de celui-ci.

5. Procédé selon la revendication 4, **caractérisé en ce qu'**un patinage et/ou une vitesse de rotation de roue sont acquis au niveau de chaque roue (7) freinée au moyen d'au moins un capteur (8) de patinage et/ou de vitesse de rotation pendant l'opération de freinage définie, la valeur ainsi déterminée représentant elle-même la valeur réelle de l'effet de freinage ou la valeur ainsi déterminée servant, en relation avec une pression de freinage définie appliquée au niveau du frein de roue respectivement freinée, à déterminer la valeur réelle de l'effet de freinage, notamment sous la forme d'un rapport pression de freinage/patinage et/ou pression de freinage/vitesse de rotation, laquelle est comparée avec une valeur comparative correspondante qui représente la valeur de consigne de l'effet de freinage.

6. Procédé selon l'une des revendications précédentes, **caractérisé en ce que** l'opération de freinage définie est initiée en appliquant une pression de freinage définie au niveau des freins de roues à freiner respectivement pendant une durée définie, l'indication de pression étant de préférence choisie de telle sorte que pour une opération de freinage en douceur, une mise en pression de freinage constante, étendue dans le temps, est effectuée jusqu'à un maximum de pression de freinage, ledit maximum de pression de freinage étant inférieur ou égal à la pression de freinage maximale pour le frein de roue respectif, ou **en ce que** pour un freinage brutal, une pression de freinage soudaine de type crête est prédéfinie, laquelle est inférieure ou égale à une pression de freinage maximale pour le frein de roue respectif.

7. Procédé selon l'une des revendications précédentes, **caractérisé en ce que** lors de l'opération de freinage définie, seul est actionné le système de freinage de semi-remorque ou de remorque (5), et non pas le système de freinage d'un véhicule tracteur (1) tractant la remorque ou le semi-remorque (2).

8. Procédé selon la revendication 7, **caractérisé en ce que** lors d'un freinage d'un semi-remorque (2) au moyen du système de freinage de semi-remorque (5), un signal d'un capteur ALB (9) d'un frein automatique en fonction du chargement (ALB), disposé sur le véhicule tracteur, notamment au niveau de l'essieu arrière du véhicule tracteur, intervient en outre dans la détermination de la position du centre de gravité vu dans le sens longitudinal du véhicule.

9. Procédé selon l'une des revendications précédentes, **caractérisé en ce qu'**après l'initialisation du contrôle de chargement embarqué, le véhicule tracteur (1) est accéléré sur un trajet défini, de préférence plat, et le poids de chargement de la remorque ou du semi-remorque est déterminé à partir du couple de démarrage mesuré à l'état chargé ainsi que du couple de démarrage sans chargement stocké ou calculé, et **en ce que** la position réelle du centre de gravité est déterminée en fonction du poids de chargement ainsi déterminé.

10. Procédé selon l'une des revendications précédentes, **caractérisé en ce que** la détection d'un semi-remorque (2) ou d'une remorque accouplé(e) au véhicule utilitaire (1) s'effectue par le biais d'au moins une technique d'interface de toute façon présente au niveau de l'interface entre le véhicule tracteur (1) d'un côté et la remorque ou le semi-remorque (2) de l'autre côté, de préférence une interface électrique et/ou une interface pneumatique, de telle sorte
qu'après un accouplement réalisé de manière conforme d'un semi-remorque (2) ou d'une remorque, au moins un signal et/ou un paramètre et/ou un jeu de données sont communiqués à un contrôleur de chargement (4) ou un module de commande de chargement, à partir desquels peuvent être dérivées directement ou indirectement des informations définies à propos du système de freinage (5) du semi-remorque (2) ou de la remorque ainsi qu'éventuellement des informations supplémentaires à propos du type et de la structure du semi-remorque (2) ou de la remorque, notamment être dérivée une position du centre de gravité du semi-remorque (2) ou de la remorque non chargé(e) ou chargé(e) de manière optimale,
qu'un modèle de contrôle stocké dans le contrôleur de chargement (4) ou le module de commande peut être invoqué et/ou activé à l'aide des données ainsi déterminées.

11. Procédé selon l'une des revendications précédentes, **caractérisé en ce que** l'initialisation du contrôle de chargement est effectuée automatiquement à chaque nouvel accouplement détecté ou automatiquement en fonction du type de semi-remorque ou de remorque détecté ou peut être prédéfinie individuellement par l'opérateur, notamment par une pression sur un bouton ou une touche et/ou par commande vocale.

12. Procédé selon l'une des revendications précédentes, **caractérisé en ce que** l'état de chargement, de préférence le poids de chargement, du semi-remorque (2) ou de la remorque est surveillé au moyen d'un dispositif de contrôle, notamment surveillé continuellement, et **en ce que** l'initialisation du contrôle de chargement est effectuée après la détection et/ou la reconnaissance d'un nouvel accouplement d'un semi-remorque (2) ou d'une remorque et/ou après la détection et/ou la reconnaissance d'un changement de chargement d'un semi-remorque (2) ou d'une remorque déjà détecté(e) et/ou reconnu(e) précédemment.

13. Procédé selon l'une des revendications précédentes, **caractérisé en ce que** l'au moins une opération de freinage définie est initiée au plus tard après un trajet de 50 m et/ou dans le plan.

14. Arrangement convenant particulièrement pour la mise en oeuvre d'un procédé selon l'une des revendications précédentes.

15. Véhicule utilitaire équipé d'un arrangement selon la revendication 14 pour la mise en oeuvre d'un procédé selon l'une des revendications 1 à 13.
